# EUROPEAN PATENT SPECIFICATION

(11) **EP 3 290 957 B1**
(45) Date of publication and mention of the grant of the patent: **11.11.2020**
(21) Application number: 17173795.0
(22) Date of filing: 31.05.2017
(51) Int. Cl.: G01T 1/24

(54) **DETECTOR, AND DETECTING SYSTEM AND METHOD FOR DIVIDING ENERGY REGIONS INTELLIGENTLY**
DETEKTOR UND DETEKTIONSSYSTEM UND VERFAHREN ZUR INTELLIGENTEN TEILUNG VON ENERGIEBEREICHEN
DÉTECTEUR ET SYSTÈME ET PROCÉDÉ DE DÉTECTION POUR DIVISER INTELLIGEMMENT DES RÉGIONS D'ÉNERGIE

(30) Priority: 31.08.2016 CN 201610797192
(43) Date of publication of application: 07.03.2018
(73) Proprietor: Nuctech Company Limited, TongFang Building, Shuangqinglu, Haidian District Beijing 100084 (CN)
(72) Inventor: ZHANG, Lan, Beijing 100084 (CN); DU, Yingshuai, Beijing 100084 (CN); LI, Bo, Beijing 100084 (CN); WU, Zonggui, Beijing 100084 (CN); LI, Jun, Beijing 100084 (CN); CAO, Xuepeng, Beijing 100084 (CN); HU, Haifan, Beijing 100084 (CN); GU, Jianping, Beijing 100084 (CN); XU, Guangming, Beijing 100084 (CN); LIU, Bicheng, Beijing 100084 (CN)
(74) Representative: Brunner, John Michael Owen

(56) References cited:
- WO-A1-2010/138607
- US-A1- 2013 343 517

## Description

### CROSS-REFERENCE TO RELATED APPLICATION(S)

This application claims a priority to the Chinese Patent Application No. 201610797192.2, filed on August 31, 2016.

### TECHNICAL FIELD

The present disclosure relates to the field of radiation imaging, and in particular, to a detection system and method for dividing energy regions intelligently.

### BACKGROUND

Imaging detection apparatuses using X-ray imaging technologies are known to people. For example, in subways, airports and bus stations, personal bags and other items of passengers are detected by using the apparatuses, so as to check whether there are illegal transport articles such as radiation sources, explosives, drugs etc. At present, the threat of terrorist organization is serious, and thus the accuracy for identifying materials in the imaging detection apparatuses is very important.

In recent years, with the development of semiconductor technology, semiconductor detectors at room temperature have been used in many fields, such as nuclear physics, X-ray detection, gamma ray detection, astronomical detection, environmental monitoring, medical imaging etc. In particular, cadmium zinc telluride (CdZnTe, CZT for short) is considered to be the most promising radiation detection material due to its advantages such as excellent energy resolution, high detection efficiency and the ability to work at room temperature.

Compared with integral and indirect type radiation detectors, photon counting imaging using CZT semiconductor detectors has higher detection efficiency, a higher signal-to-noise ratio and a higher energy resolution. Therefore, it is possible to display images for a plurality of energy regions, and to identify materials by using information on the plurality of energy regions. Currently, multi-energy imaging apparatuses for detection have been proposed, and different energy region divisions can be applied to image display and material identification. In particular, the energy region divisions may include equal energy region division, fine energy region division, optimized energy region division etc.

In fact, the optimized energy region division of materials is directly related to the materials to be scanned. For example, when monocrystalline or polycrystalline materials are identified using Bragg diffraction, scattering energy caused by different crystalline materials is different. When metal materials are identified using K-edge, the K-edge caused by the different metal materials is also different. When non-metallic materials are identified, capabilities of identification of different materials are also different for different energy region divisions. Thus, a single energy region division can only be applied to a single field. However, different conditions may occur in security detection of articles in public places, such as radioactive sources, liquids, explosives, drugs, etc. A single energy region division cannot be applied to places which may have a large number of suspicious articles.

Generally, existing products use a fixed energy region division, that is, existing products can only be applied to relatively narrow fields. For example, when a product for dividing energy regions for metal identification is used to identify liquid or an organic material, the effect will be deteriorated. Similarly, when a product for dividing energy regions for organic material identification is used for other applications, the effect will also be deteriorated. Therefore, the existing products are difficult to be applied to a complex place, but there is a need for a device to identify various articles simultaneously in current security situations. However, if a plurality of such detectors are arranged in the same place to operate as a multi-energy imaging apparatus for detection, the imaging apparatus will be expensive and there will be increased requirements for the place. In addition, there are also multi-energy imaging apparatuses for detection which are achieved by increasing a number of energy regions (e.g., 32, 256 or more energy regions). However, there will be extreme high design requirements for such apparatuses, the development on hardware and/or software of the apparatuses is also difficult, and most of the energy regions have little contribution to material identification in practice, resulting in lower efficiency of the apparatuses.

In addition, in a single linear array detector, pixels which operate normally cannot reach 100%, and damaged pixels may have a great impact on material identification and image display. Since the detectors usually have a high cost, it is expensive to replace a detector. Besides, for a full-time operating detector, it is inconvenient to replace the detector.

WO2010138607A1 relates to a system for identifying objects in a container comprising first and second screening systems, the first screening system comprising a stationary X-ray source for generating X-rays from a plurality of X-ray source positions around a scanning region; a first set of detectors arranged to detect X-rays transmitted through the scanning region; a second set of detectors arranged to detect X-rays scattered within the scanning region; a processor configured to process data output from the first set of detectors to generate at least one tomographic image and to process data output from the second set of detectors to generate scatter image data; and the second screening system comprising at least one of a NQR-based screening system, X-ray diffraction based screening system, X-ray back-scatter based screening system, or trace detection based screening system. US2013343517A1 relates to CT apparatus that comprises a CT detector including a plurality of energy-discriminating detector elements configured to capture incident X-ray photons emitted from an X-ray source during a low-dose pre-scan of an object for a plurality of projection views; a data acquisition unit configured to acquire data detected by the plurality of energy-discriminating detector elements during each of the plurality of projection views of the low-dose pre-scan; a contour calculation unit configured to calculate a contour of the object in each of the plurality of projection views, based on the acquired data; and a controller configured to individually switch a respective bias voltage of each of the plurality of energy-discriminating detector elements ON or OFF during a subsequent scan of the object, based on the calculated contour of the object.

Accordingly, the present disclosure is directed to provide a detecting system and method for dividing energy regions intelligently, which can satisfy extreme high demands on the system design due to increased energy regions while mitigating the impact of the damaged pixels of the detector on image display and material identification. Further, the present disclosure can utilize the performance of the detector effectively, and can improve the operating efficiency of the detecting system and the capability of material identification.

### SUMMARY

In order to at least solve at least one of the above problems, the present disclosure provides a detecting system and method for dividing energy regions, as defined in the appended independent claims. Additional features of the detecting system are defined in the appended dependent claims.

### BRIEF DESCRIPTION OF THE DRAWINGS

The above and other aspects, features and advantages of the exemplary embodiments of the present disclosure will become more apparent from the following description taken in conjunction with the accompanying drawings, in which:
Figs. 1a) and 1b) show diagrams illustrating a distribution of anode electrodes of an exemplary detector;
Fig. 2 shows a diagram illustrating an exemplary process of a detecting method;
Fig. 3 shows a block diagram illustrating a detecting system for dividing energy regions intelligently according to an exemplary embodiment of the present disclosure;
Fig. 4 shows a flowchart illustrating a detection method for dividing energy regions intelligently according to an exemplary embodiment of the present disclosure; and
Fig. 5 shows a diagram illustrating an application environment of a detecting system according to an exemplary embodiment of the present disclosure.

### DETAILED DESCRIPTION

In the following, exemplary embodiments of the present disclosure are discussed with reference to the accompanying drawings. The present disclosure provides a detecting system and method for dividing energy regions intelligently, which can satisfy extreme high demands on the system design due to increased energy regions and mitigate the impact of the damaged pixels of the detector on image display and material identification. Further, the present disclosure can utilize the performance of the detector effectively and improve the operating efficiency of the detecting system.

It should be understood that although the CZT detectors capable of operating at a room temperature and having a high energy resolution and detection efficiency are used in the following description, the present disclosure is not limited to the CZT detectors, and other detectors such as Cadmium Telluride (CdTe), Cadmium Manganese Telluride (CdMnTe), Mercuric Iodide (HgI2), Thallium Bromide (TlBr), Lead Iodide (PbI2), Gallium Arsenide (GaAs), Germanium (Ge) etc. can also be used.

In addition, it should be noted that although multiple energy implementations according to the embodiments of the present disclosure are based on a material identification system, the present disclosure is not limited thereto. The inventive concept can be applied to fields such as industrial Computed Tomography (CT), medical imaging, dental CT, etc.

Accordingly, the present disclosure is directed to provide a detecting system and method for dividing energy regions intelligently, which can satisfy extreme high demands on the system design due to increased energy regions and mitigate the impact of the damaged pixels of the detector on image display and material identification. Further, the present disclosure can utilize the performance of the detector effectively and improve the operating efficiency of the detecting system and the capability of material identification.

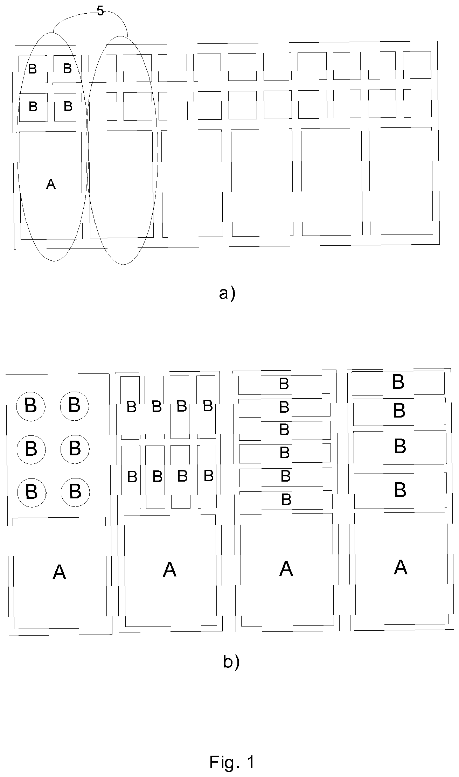

A detector may increase a counting rate by optimizing a structure of electrodes of the detector. Figs. 1a) and 1b) show diagrams illustrating a distribution of anode electrodes of a detector that may be used in a detecting system according the present disclosure. As shown in Fig. 1a), a column of pixels 5 of the detector may comprise one class-A electrode (denoted as "A") and a plurality of class-B electrodes (denoted as "B"), and the class-A electrode and the class-B electrodes are arranged in a moving direction of a detected object, such that rays transmitted through the detected object firstly enter into the class-A electrode and then into the class-B electrodes. In an embodiment, a class-A pixel corresponding to the class-A electrode may be used to scan the detected object roughly to identify a material of the detected object, and class-B pixels corresponding to the class-B electrodes may be used to divide energy regions intelligently according to a result of the identification of the class-A pixel, thereby improving the capability of material identification and the counting rate. Alternatively, when the energy regions of the class-B pixels are divided, each of the class-B pixels may have the same or different energy region divisions. In addition, each of the class-B pixels may at least have 3 energy regions, and the energy region division may implemented by dividing the energy regions equally, or selecting a particular energy region separately. It should be noted that shapes of the class-A pixel and the class-B pixels are not limited to the shapes shown in Fig. 1a), and various shapes of the class-A pixel and the class-B pixels may be used. Fig. 1b) is a diagram illustrating other potential distributions of the anode electrodes of the detector. Additionally, there may be a guiding electrode or a protecting electrode arranged between respective electrodes.

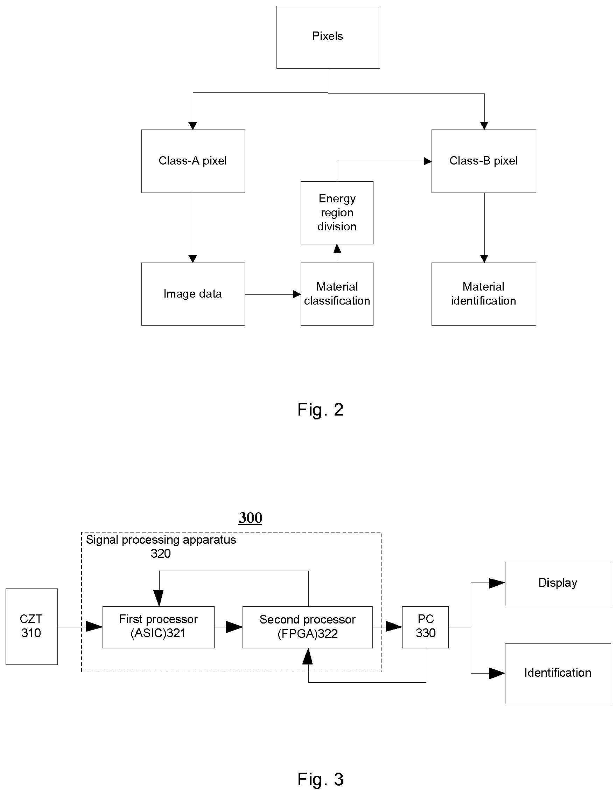

Fig. 2 shows a diagram illustrating a process of an exemplary detecting method. In a case of using the exemplary detector as described above, when an object is detected, rays transmitted through the detected object firstly enters into the class-A electrode and then into the class-B electrodes. When a detection signal generated by the class-A electrode is detected, image data of the detected object may be acquired. Then, a material component of the detected object is roughly estimated based on the acquired image data. In other words, material classification is performed. Subsequently, based on the roughly estimated material component, energy region ranges are reasonably selected and divided, i.e., the energy regions are divided intelligently, for determining energy regions to which a detection signal corresponding to the class-B electrodes belongs. Then, a number of signals in each energy region is calculated, so as to identify material accurately.

Alternatively, the electrodes in the above-described exemplary embodiments may be formed by using chemical coating, sputtering, evaporation, surface synthesis etc., and the electrodes may be ohmic contact-type electrodes or Schottky contact-type electrodes. In addition, the material of the electrodes may be gold, platinum, indium, indium oxide, rhodium or other metal material, or a mixed material.

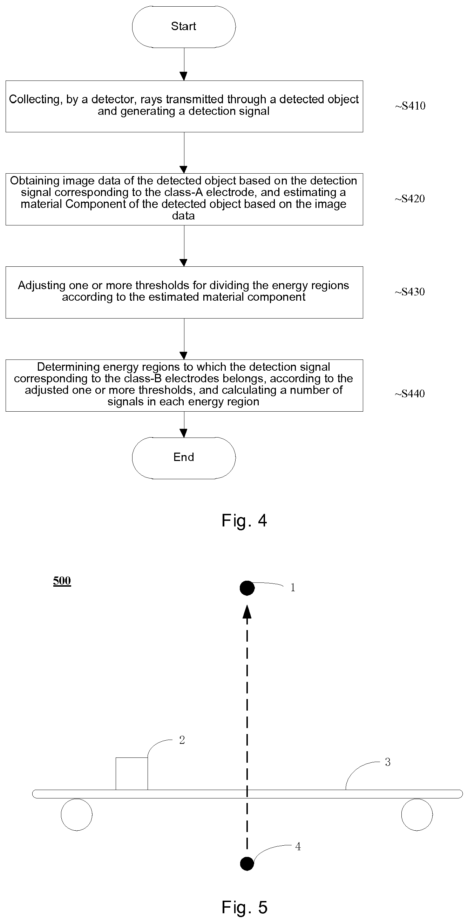

The detecting system and the detecting method thereof according to the present disclosure will be described in detail below with reference to Figs. 3 and 4. Fig. 3 shows a block diagram of a detecting system for dividing energy regions intelligently according to an exemplary embodiment of the present disclosure.

In particular, the detecting system 300 according to the present disclosure comprises a detector 310, a signal processing apparatus 320 and a host computer. The detector 310 is configured to collect rays transmitted through a detected object, generate a detection signal according to the rays, and transmit the detection signal to the signal processing apparatus 320, wherein each column of pixels of the detector comprises one class-A electrode and a plurality of class-B electrodes, wherein the class-A electrode and the class-B electrodes are arranged sequentially in a moving direction of the detected object, such that the rays transmitted through the detected object firstly enter into the class-A electrode and then into the class-B electrodes. A detailed structure of the detector 310 has been shown in Fig. 1, which will not be discussed in detail here. In addition, although the detector 310 has been implemented with a CZT detector in the embodiment, the present disclosure is not limited thereto. The detector 310 may also be implemented with other types of detectors, as long as each column of pixels have a structure of electrodes in the embodiments of the disclosure. When the above-described detecting system operates, the rays transmitted through the detected object enter into and then interact with the detector 310, which generates electrons and holes. The electrons travel in the electric field and reach the class-A and class-B anode electrodes of the pixels.

In addition, the detecting system 300 includes the signal processing apparatus 320 and the host computer 330 (such as, a PC). In particular, the signal processing apparatus 320 includes a first processor 321 and a second processor 322. The first processor 321 is configured to receive and process the detection signal, calculate a number of signals in each energy region according to one or more thresholds for dividing energy regions, and transmit the detection signal, the one or more thresholds and the calculated numbers to the second processor 322. The second processor 322 is configured to receive the detection signal, the one or more thresholds and the calculated numbers from the first processor 321, and transmit the detection signal and the calculated numbers to the host computer 330. Alternatively, the first processor 321 may be implemented as an Application Specific Integrated Circuit (ASIC), wherein the ASIC may include a charge-sensitive pre-amplification unit, a primary amplification unit, a filtering and imaging unit, a threshold device, a counter, etc., so as to achieve functions of counting of various energy regions and threshold adjustment. The first processor 321 may amplify, filter and shape the signal from the anode and perform the counting of respective energy regions according to the corresponding thresholds adjusted by the second processor 322. Alternatively, the second processor 322 may be implemented with a Field Programmable Gate Array (FPGA). The second processor 322 transmits the counted values for respective energy regions from the first processor 321 to the host computer 330. The host computer 330 is configured to receive the detection signal and the counted values from the second processor 322, obtain image data of the detected object based on the detection signal corresponding to the class-A electrode, and estimate a material component of the detected object based on the image data. In addition, the host computer 330 is configured to control the second processor 322 to adjust the one or more thresholds in the first processor 321 according to the estimated material component, so as to divide the energy regions intelligently. Alternatively, the host computer 330 may further be configured to output the image data based on the detection signal corresponding to the class-A electrode, and identify the material based on the detection signal corresponding to the class-B electrodes. Alternatively, the host computer 330 may further be configured to output the image data based on the detection signals corresponding to the class-A electrode and the class-B electrodes. Of course, the detection signal corresponding to the class-B electrodes may also be used to output image data, especially when the class-A pixel has been damaged, which can improve the imaging quality and reduce the cost of maintenance. When the host computer is implemented as a PC, the host computer 330 may be configured to control the second processor 322 to adjust the thresholds in the first processor 321, display the image of the detected object, and determine the components and categories of the detected object. Specifically, the host computer 330 may be configured to control the second processor 322 to acquire the thresholds from the first processor 321, adjust the acquired thresholds, and transmit the adjusted thresholds to the first processor 321 to update the thresholds in the first processor 321. Furthermore, after the host computer 330 receives the detection signal corresponding to the class-A electrode, the energy regions of the class-B pixels are divided intelligently according to algorithms stored in the host computer, and the thresholds for the energy regions in the first processor 321 are adjusted and controlled by the second processor 322.

Fig. 4 shows a flowchart illustrating a detecting method for dividing energy regions intelligently according to the present disclosure. As shown in Fig. 4, in step 410, when a detected object passes through a scanning area, rays transmitted through the detected object are collected by a detector according to the present disclosure, so as to generate a detection signal. Since the detector according to the disclosure is utilized during detection, the rays transmitted through a certain position of the detected object firstly enter into the class-A electrode and then enter the class-B electrodes as the detected object moves. In step 420, image data of the detected object is acquired based on the detection signal corresponding to the class-A electrode, and a material component of the detected object is estimated based on the image data. Specifically, by collecting the detection signal corresponding to the class-A electrode, the image data of the detected object is obtained. A suspicious component of the detected object may be obtained by performing data processing and analysis on the image data. In step 430, one or more thresholds for dividing the energy regions are adjusted according to the estimated material component. That is, the energy regions of the class-B electrodes are intelligently divided according to the estimated suspicious component, so as to obtain optimal energy region division intervals. When there are a plurality of suspicious materials, the energy regions of the class-B electrodes may be selected to cover all energy regions of the various suspicious materials. For example, in a case that one single class-A electrode corresponds to 4 class-B electrodes, if a number of selectable energy regions of each class-B electrode is 5, a total number of energy regions of the class-B electrodes corresponding to the one single class-A electrode is 20. Therefore, compared with a case that there are a fixed number of energy regions, the present disclosure can increase the number of energy regions, and compared with a case that there are a large number of energy regions, the present disclosure can improve the counting rate for a single pixel, which can improve the accuracy for identifying material. Finally, in step 440, energy regions of the detection signal corresponding to the class-B electrodes are determined according to the adjusted thresholds, and a number of signals in each energy region is calculated.

Fig. 5 shows a diagram illustrating an application environment 500 of a detecting system according to an exemplary embodiment of the present disclosure. As shown in Fig. 5, the detecting system may comprise a linear array detector 1, which may use the structure of the electrodes of the detector according to the present disclosure, a detected object 2, a conveyor belt 3, and a radioactive source 4. The detected object may pass through a scanning area via the delivery of the conveyor belt, and then may be radiated by the radioactive source. A cross section of the detected object may firstly pass through a scanning area of a class-A electrode of the detector. A host computer may obtain an image of the cross section by using algorithms and identify a suspicious component of the detected object. Based on the suspicious component, the host computer may control a second processor to adjust one or more thresholds for dividing energy regions in the first processor, so as to finely divide the energy regions of class-B electrodes of the detector. Thereafter, a detection signal corresponding to the class-B electrodes is transmitted to the host computer via the first processor and the second processor. After being processed and analyzed, the detection signal may be used to determine the material component of the detected object accurately. In addition, it is also possible to use the detection signal corresponding to the class-B electrodes for image display.

In view of the above, the present disclosure is directed to provide a detecting system and method for dividing energy regions intelligently, which can satisfy extreme high demands on the system design due to increased energy regions and mitigate the impact of the damaged pixels of the detector on image display and material identification. Further, the present disclosure can utilize the performance of the detector effectively, and improve the operating efficiency of the detecting system, which can improve the quality of the images and be beneficial to identify the material of the detected object by observers. Also, the present disclosure can improve the capability of material identification by combining with an algorithm for identifying materials.

It is to be understood that although the foregoing description has been made for the purpose of identifying materials, the present disclosure is not limited thereto, and the present disclosure can also be applied to a radiation imaging system with a multi-angle, multi-light source, multi-detector structure.

The above implementation is merely a specific implementation of the inventive concept, and the invention is not limited to the above-described.

The foregoing method may be implemented in a form of a executable program commands which can be recorded in a computer readable recording medium and implemented by a variety of computer apparatuses. In this case, the computer-readable recording medium may include a separate program command, a data file, a data structure, or a combination thereof. At the same time, the program commands recorded in the recording medium may be specifically designed or configured for use in the present disclosure, or be well known by a person skilled in the art of computer software. The computer-readable recording medium may comprise a magnetic medium such as a hard disk, a floppy disk or a magnetic tape, an optical medium such as a compact disc read-only memory (CD-ROM) or a digital versatile disk (DVD), a magneto-optical medium such as a magneto-optical floppy disk, and hardware such as ROM, RAM and FLASH which may store and implement the program commands. In addition, the program commands may comprise machine language codes formed by compilers and executable high-level language which is executable by using an interpreter via computers. The preceding hardware device may be configured to operate as at least one software module to perform the operations of the present disclosure, and vice versa.

Although the operation of the method of the present method is shown and described in a particular order, it is possible to change the order of operations of each method, such that a particular operation may be performed in reverse order or such that a particular operation may be performed at least partially with other operations. Furthermore, the invention is not limited to the example embodiments described above, and may include one or more other components or operations, or omit one or more other components or operations without departing from the scope of the present disclosure.

While the present disclosure has been shown in connection with the preferred embodiments of the present disclosure, it will be understood by those skilled in the art that various modifications, substitutions and alterations can be made therein without departing from the scope of the invention. Accordingly, the invention should not be limited by the above-described embodiments, but should be defined by the appended claims.

In view of the above, the present disclosure is directed to provide a detector and a detecting system according to claim 1 and method according to claim 9 for dividing energy regions intelligently, which can satisfy extreme high demands on the system design due to increased energy regions and mitigate the impact of the damaged pixels of the detector on image display and material identification. Further, the present disclosure can utilize the performance of the detector effectively, and improve the operating efficiency of the detecting system, which can improve the quality of the images and be beneficial to identify the material of the detected object by observers. Also, the present disclosure can improve the capability of material identification by combining with an algorithm for identifying materials.

It is to be understood that although the foregoing description has been made for the purpose of identifying materials, the present disclosure is not limited thereto, and the present disclosure can also be applied to a radiation imaging system with a multi-angle, multi-light source, multi-detector structure.

The above implementation is merely a specific implementation of the inventive concept, and the invention is not limited to the above-described implementations. It is possible to omit or skip some processes in the above-described implementations without departing from the scope of the present disclosure.

The foregoing method may be implemented in a form of a executable program commands which can be recorded in a computer readable recording medium and implemented by a variety of computer apparatuses. In this case, the computer-readable recording medium may include a separate program command, a data file, a data structure, or a combination thereof. At the same time, the program commands recorded in the recording medium may be specifically designed or configured for use in the present disclosure, or be well known by a person skilled in the art of computer software. The computer-readable recording medium may comprise a magnetic medium such as a hard disk, a floppy disk or a magnetic tape, an optical medium such as a compact disc read-only memory (CD-ROM) or a digital versatile disk (DVD), a magneto-optical medium such as a magneto-optical floppy disk, and hardware such as ROM, RAM and FLASH which may store and implement the program commands. In addition, the program commands may comprise machine language codes formed by compilers and executable high-level language which is executable by using an interpreter via computers. The preceding hardware device may be configured to operate as at least one software module to perform the operations of the present disclosure, and vice versa.

Although the operation of the method of the present method is shown and described in a particular order, it is possible to change the order of operations of each method, such that a particular operation may be performed in reverse order or such that a particular operation may be performed at least partially with other operations. Furthermore, the invention is not limited to the example embodiments described above, and may include one or more other components or operations, or omit one or more other components or operations without departing from the scope of the present disclosure.

While the present disclosure has been shown in connection with the preferred embodiments of the present disclosure, it will be understood by those skilled in the art that various modifications, substitutions and alterations can be made therein without departing from the scope of the invention. Accordingly, the invention should not be limited by the above-described embodiments, but should be defined by the appended claims.

## Claims

1. A detecting system (300), the system comprising a detector (310), the detector comprising a plurality of columns of pixels, each column of pixels including one class-A electrode and a plurality of class-B electrodes, wherein the detector is configured to collect rays transmitted through a detected object, and generate a detection signal according to the rays,
wherein the class-A electrode and the class-B electrodes are sequentially arranged in a moving direction of the detected object, such that the rays transmitted through the detected object firstly enter into the class-A electrode and then into the class-B electrodes,
wherein the system further comprises a signal processing apparatus (320) and a host computer (330), the signal processing apparatus comprising a first processor (321) and a second processor (322),
wherein the first processor (321) is configured to receive the detection signal from the detector and process the detection signal, calculate a number of signals in each energy region by using one or more thresholds for dividing the energy regions, and transmit the detection signal, the one or more thresholds and the calculated number to the second processor (322), and
wherein the second processor is configured to receive the detection signal, the one or more thresholds and the calculated number from the first processor, and transmit the detection signal and the calculated number to the host computer (330);
wherein the host computer is configured to receive the detection signal and the calculated number from the second processor, obtain image data of the detected object based on the detection signal corresponding to the class-A electrode, estimate a material component of the detected object according to the image data, and control the second processor to adjust the one or more thresholds in the first processor according to the estimated material component, wherein the adjusted one or more thresholds are used to determine energy regions to which the detection signal corresponding to the class-B electrodes belongs and calculate the number of signals in each energy region.

2. The detecting system of claim 1, further comprising a guiding electrode or a protecting electrode arranged between respective electrodes.

3. The detecting system of claim 1 or 2, wherein a class-A pixel corresponding to the class-A electrode has at least one energy region.

4. The detecting system of any preceding claim, wherein each of class-B pixels corresponding to the plurality of class-B electrodes has at least three energy regions.

5. The detecting system of claim 4, wherein each of the class-B pixels has the same energy region division.

6. The detecting system of claim 4, wherein each of the class-B pixels has different energy region divisions.

7. The detecting system of any preceding claim, wherein the host computer is further configured to output the image data based on the detection signal corresponding to the class-A electrode, and identify material based on a detection signal corresponding to the class-B electrodes.

8. The detecting system of any one of claims 1-6, wherein the host computer is further configured to output the image data based on the detection signals corresponding to the class-A electrode and the class-B electrodes.

9. A detecting method for dividing energy regions, comprising:
collecting (410), by a detector (310), rays transmitted through a detected object and generating a detection signal according to the rays, wherein each column of pixels of the detector comprises one class-A electrode and a plurality of class-B electrodes, and the class-A electrode and the class-B electrodes are arranged sequentially in a moving direction of the detected object, such that the rays transmitted through the detected object firstly enter into the class-A electrode and then into the class-B electrodes;
obtaining (420) image data of the detected object based on the detection signal corresponding to the class-A electrode, and estimating a material component of the detected object based on the image data;
adjusting (430) one or more thresholds for dividing the energy regions according to the estimated material component; and
determining (440) an energy region to which the detection signal corresponding to the class-B electrodes belongs, according to the adjusted one or more thresholds, and calculating a number of signals in each energy region.

## Patentansprüche

1. Detektionssystem (300), wobei das System einen Detektor (310) umfasst, wobei der Detektor mehrere Spalten von Pixeln umfasst, wobei jede Spalte von Pixeln eine Klasse-A-Elektrode und mehrere Klasse-B-Elektroden umfasst, wobei der Detektor zum Sammeln von Strahlen, die durch ein detektiertes Objekt transmittiert werden, und Erzeugen eines Detektionssignals gemäß den Strahlen konfiguriert ist, wobei die Klasse-A-Elektrode und die Klasse-B-Elektrode sequentiell in einer Bewegungsrichtung des detektierten Objekts angeordnet sind, so dass die Strahlen, die durch das detektierte Objekt transmittiert werden, zuerst in die Klasse-A-Elektrode und dann in die Klasse-B-Elektrode eindringen,
wobei das System ferner eine Signalverarbeitungseinrichtung (320) und einen Hostcomputer (330) umfasst, wobei die Signalverarbeitungseinrichtung einen ersten Prozessor (321) und einen zweiten Prozessor (322) umfasst,
wobei der erste Prozessor (321) zum Empfangen des Detektionssignals von dem Detektor und Verarbeiten des Detektionssignals, Berechnen einer Zahl von Signalen in jedem Energiegebiet durch Verwenden einer oder mehrerer Schwellen zum Aufteilen der Energiegebiete und Übertragen des Detektionssignals, der einen oder der mehreren Schwellen und der berechneten Zahl an den zweiten Prozessor (322) konfiguriert ist, und
wobei der zweite Prozessor zum Empfangen des Detektionssignals, der einen oder der mehreren Schwellen und der berechneten Zahl von dem ersten Prozessor und Übertragen des Detektionssignals und der berechneten Zahl an den Host-Computer (330) konfiguriert ist;
wobei der Hostcomputer zum Empfangen des Detektionssignals und der berechneten Zahl von dem zweiten Prozessor, Erhalten der Bilddaten des detektierten Objekts basierend auf dem Detektionssignal, das der Klasse-A-Elektrode entspricht, Schätzen einer Materialkomponente des detektierten Objekts gemäß den Bilddaten und Steuern des zweiten Prozessors zum Anpassen der einen oder der mehreren Schwellen in dem ersten Prozessor gemäß der geschätzten Materialkomponente konfiguriert ist, wobei die eine oder die mehreren angepassten Schwellen verwendet werden, um Energiegebiete zu bestimmen, zu denen das den Klasse-B-Elektroden entsprechende Detektionssignal gehört, und die Zahl von Signalen in jedem Energiegebiet zu berechnen.

2. Detektionssystem nach Anspruch 1, das ferner eine Führungselektrode oder eine Schutzelektrode umfasst, die zwischen jeweiligen Elektroden angeordnet ist.

3. Detektionssystem nach Anspruch 1 oder 2, wobei ein Klasse-A-Pixel, das der Klasse-A-Elektrode entspricht, wenigstens ein Energiegebiet aufweist.

4. Detektionssystem nach einem vorhergehenden Anspruch, wobei jedes der Klasse-B-Pixel, das den mehreren Klasse-B-Elektroden entspricht, wenigstens drei Energiegebiete aufweist.

5. Detektionssystem nach Anspruch 4, wobei jedes der Klasse-B-Pixel die gleiche Energiegebietaufteilung aufweist.

6. Detektionssystem nach Anspruch 4, wobei jedes der Klasse-B-Pixel unterschiedliche Energiegebietaufteilungen aufweist.

7. Detektionssystem nach einem vorhergehenden Anspruch, wobei der Host-Computer ferner zum Ausgeben der Bilddaten basierend auf dem der Klasse-A-Elektrode entsprechenden Detektionssignal und Identifizieren eines Materials basierend auf einem den Klasse-B-Elektroden entsprechenden Detektionssignal konfiguriert ist.

8. Detektionssystem nach einem der Ansprüche 1-6, wobei der Host-Computer ferner zum Ausgeben der Bilddaten basierend auf den Detektionssignalen, die der Klasse-A-Elektrode und den Klasse-B-Elektroden entsprechen, konfiguriert ist.

9. Detektionsverfahren zum Aufteilen von Energiegebieten, das Folgendes umfasst:
Sammeln (410), durch einen Detektor (310), von Strahlen, die durch ein detektiertes Objekt transmittiert werden, und Erzeugen eines Detektionssignals gemäß den Strahlen, wobei jede Spalte von Pixeln des Detektors eine Klasse-A-Elektrode und mehrere Klasse-B-Elektroden umfasst und die Klasse-A-Elektrode und die Klasse-B-Elektrode sequentiell in einer Bewegungsrichtung des detektierten Objekts angeordnet sind, so dass die Strahlen, die durch das detektierte Objekt transmittiert werden, zuerst in die Klasse-A-Elektrode und dann in die Klasse-B-Elektrode eindringen;
Erhalten (420) der Bilddaten des detektierten Objekts basierend auf dem Detektionssignal, das der Klasse-A-Elektrode entspricht, und Schätzen einer Materialkomponente des detektierten Objekts basierend auf den Bilddaten;
Anpassen (430) einer oder mehrerer Schwellen zum Aufteilen der Energiegebiete gemäß der geschätzten Materialkomponente; und
Bestimmen (440) eines Energiegebiets, zu dem das Detektionssignal, das der Klasse-B-Elektrode entspricht, gehört, gemäß der einen oder den mehreren angepassten Schwellen und Berechnen einer Zahl von Signalen in jedem Energiegebiet.

## Revendications

1. Système de détection (300), le système comprenant un détecteur (310), le détecteur comprenant une pluralité de colonnes de pixels, chaque colonne de pixels comprenant une électrode de classe A et une pluralité d'électrodes de classe B, dans lequel le détecteur est configuré pour collecter des rayons émis à travers un objet détecté, et pour générer un signal de détection en fonction des rayons,
dans lequel l'électrode de classe A et les électrodes de classe B sont successivement agencées dans une direction de déplacement de l'objet détecté, de sorte que les rayons émis à travers l'objet détecté entrent tout d'abord dans l'électrode de classe A, puis dans les électrodes de classe B,
le système comprenant en outre un appareil de traitement de signal (320) et un ordinateur hôte (330), l'appareil de traitement de signal comprenant un premier processeur (321) et un second processeur (322),
dans lequel le premier processeur (321) est configuré pour recevoir le signal de détection en provenance du détecteur et traiter le signal de détection, calculer un nombre de signaux dans chaque région d'énergie en utilisant un ou plusieurs seuils pour diviser les régions d'énergie, et transmettre le signal de détection, le ou les seuils et le nombre calculé au second processeur (322), et
dans lequel le second processeur est configuré pour recevoir le signal détection, le ou les seuils et le nombre calculé en provenance du premier processeur, et pour émettre le signal de détection et le nombre calculé vers l'ordinateur hôte (330) ;
dans lequel l'ordinateur hôte est configuré pour recevoir le signal détection et le nombre calculé en provenance du second processeur, obtenir des données d'image de l'objet détecté sur la base du signal de détection correspondant à l'électrode de classe A, estimer un composant de matériau de l'objet détecté en fonction des données d'image, et commander le second processeur afin d'ajuster le ou les seuils dans le premier processeur en fonction du composant de matériau estimé, dans lequel le ou les seuils ajustés sont utilisés pour déterminer des régions d'énergie auxquelles appartient le signal de détection correspondant aux électrodes de classe B et calculer le nombre de signaux dans chaque région d'énergie.

2. Système de détection selon la revendication 1, comprenant en outre une électrode de guidage ou une électrode de protection agencée entre des électrodes respectives.

3. Système de détection selon la revendication 1 ou 2, dans lequel un pixel de classe A correspondant à l'électrode de classe A présente au moins une région d'énergie.

4. Système de détection selon l'une quelconque des revendications précédentes, dans lequel chacun des pixels de classe B correspondant à la pluralité d'électrodes de classe B possède au moins trois régions d'énergie.

5. Système de détection selon la revendication 4, dans lequel chacun des pixels de classe B possède la même division de régions d'énergie.

6. Système de détection selon la revendication 4, dans lequel chacun des pixels de classe B possède différentes divisions de régions d'énergie.

7. Système de détection selon l'une quelconque des revendications précédentes, dans lequel l'ordinateur hôte est en outre configuré pour sortir les données d'image sur la base du signal de détection correspondant à l'électrode de classe A, et pour identifier un matériau sur la base d'un signal de détection correspondant aux électrodes de classe B.

8. Système de détection selon l'une quelconque des revendications 1 à 6, dans lequel l'ordinateur hôte est en outre configuré pour sortir les données d'image sur la base des signaux de détection correspondant à l'électrode de classe A et aux électrodes de classe B.

9. Procédé de détection permettant de diviser des régions d'énergie, consistant à :
collecter (410), par un détecteur (310), des rayons transmis à travers un objet détecté et générer un signal de détection en fonction des rayons, dans lequel chaque colonne de pixels du détecteur comprend une électrode de classe A et une pluralité d'électrodes de classe B, et l'électrode de classe A et les électrodes de classe B sont agencées successivement dans une direction de déplacement de l'objet détecté, de sorte que les rayons transmis à travers l'objet détecté entrent tout d'abord dans l'électrode de classe A, puis dans les électrodes de classe B ;
obtenir (420) des données d'image de l'objet détecté sur la base du signal de détection correspondant à l'électrode de classe A, et estimer un composant de matériau de l'objet détecté sur la base des données d'image ;
ajuster (430) un ou plusieurs seuils pour diviser les régions d'énergie en fonction du composant de matériau estimé ; et
déterminer (440) une région d'énergie à laquelle appartient le signal de détection correspondant aux électrodes de classe B, selon le ou les seuils ajustés, et calculer un nombre de signaux dans chaque région d'énergie.
